Europäisches Patentamt

European Patent Office

Office européen des brevets

(11) Veröffentlichungsnummer: **0 036 108**
**A2**

(12) **EUROPÄISCHE PATENTANMELDUNG**

(21) Anmeldenummer: 81101310.1

(22) Anmeldetag: 24.02.81

(51) Int. Cl.³: **G 01 K 17/08**

(30) Priorität: 28.02.80 DE 3007485

(43) Veröffentlichungstag der Anmeldung:
23.09.81 Patentblatt 81/38

(84) Benannte Vertragsstaaten:
AT BE CH DE FR GB IT LI LU NL SE

(71) Anmelder: Schultz, Johannes
Friedrich-Koenig-Strasse 3-5
D-6800 Mannheim 1(DE)

(71) Anmelder: Völker, Karl
Friedrich-Koenig-Strasse 3-5
D-6800 Mannheim 1(DE)

(72) Erfinder: Schultz, Johannes
Friedrich-Koenig-Strasse 3-5
D-6800 Mannheim 1(DE)

(72) Erfinder: Völker, Karl
Friedrich-Koenig-Strasse 3-5
D-6800 Mannheim 1(DE)

(72) Erfinder: Braun, Lothar
Friedrich-Koenig-Strasse 3-5
D-6800 Mannheim 1(DE)

(74) Vertreter: Ratzel, Gerhard, Dr.
Seckenheimer Strasse 36a
D-6800 Mannheim 1(DE)

(54) Vorrichtung zur elektrischen Verbrauchsermittlung einzelner Wärmeverbraucher, die von einer Wärmequelle versorgt werden.

㊿ Die Erfindung betrifft eine Vorrichtung zur elektrischen Verbrauchsermittlung einzelner Wärmeverbraucher, die von einer Wärmequelle versorgt werden, bestehend aus einem Gehäuse, welches in unmittelbarem Kontakt mit dem Wärmeverbraucher angeordnet ist wobei im Gehäuse auf der dem Wärmeverbraucher zugewandten Seite mindestens ein Meßfühler angeordnet ist der mit einer im Innern des Gehäuses angeordneten Auswertschaltung zur integralen Verarbeitung verbunden ist, wobei erfindungsgemäß der Meßfühler mindestens ein Meßwandler, beispielsweise ein Thermoelemente ist, der einen geringen Anteil der Wärmeenergie des Wärmeverbrauchers in Abhängigkeit von dessen Temperatur in Thermoelektrizität umwandelt, die als Meßgröße für die abgegebene Wärmemenge des Wärmeverbrauchers zur Versorgung einer elektrischen Auswertschaltung dient, die zur Erzeugung eines Temperaturgefälles innerhalb des Gehäuses an der dem Wärmeverbraucher abgewandten Seite angeordnet ist.

Dabei kann der Meßwandler aus einer Vielzahl von in Reihe geschalteten Thermoelementen bestehen und die Auswertschaltung eine elektrolytische Meßzelle (Coulombmeter) sein, die mit der temperaturabhängigen Gesamtspannung der Thermoelemente als Betriebsspannung beaufschlagt ist. Der elektrolytischen Meßzelle kann ein Anpassungsnetzwerk vor- oder parallel-geschaltet sein. Zur Erzeugung einer Referenztemperatur kann mindestens ein zweiter Meßwandler dienen, der in Abstand von dem Wärmeverbraucher angeordnet ist und der zusammen mit dem in unmittelbarem Kontakt mit dem Wärmeverbraucher stehenden Meßwandler eine temperaturabhängige Differenzspannung bildet, die auf die Auswertschaltung aufgegeben wird. Die Anzeige der Auswertschaltung kann auf ein Anzeigegerät aufgebar sein mit von außen ablesbarer analoger oder digitaler Anzeige und interner und externer Energieversorgung. Die Erfindung betrifft ferner eine Vorrichtung zur elektrischen Verbrauchsermittlung bei der der Meßfühler aus mindestens zwei Schwingquarzen besteht, deren Schwingungsfrequenzen unterschiedlich temperaturabhängig sind, wobei aus den beiden Frequenzen eine temperaturabhängige Schwebungsfreuquenz gebildet ist, die als Meßgröße für die abgegebene Wärmemenge des Wärmeverbrauchers auf die elektrische Auswertschaltung gegeben wird. Dabei kann zur Energieversorgung der Schwingquarze und gegebenenfalls der Auswertschaltung an Wärmeverbraucher ein Meßwandler angeordnet sein, der einen geringen Anteil der Wärmeenergie desselben in Thermoelektrizität umwandelt. Die elektrische Auswertschaltung kann einen Frequenzteiler mit nachfolgendem Anzeigegerät aufweisen.
./...

Fig. 1

Fig. 2

Fig. 3

Die Erfindung betrifft eine Vorrichtung zur elektrischen Verbrauchsermittlung einzelner Wärmeverbraucher, insbesondere Heizkörper und/oder Warmwasserzapfstellen, die von einer Wärmequelle, insbesondere Heizanlage und/oder Warmwasserbereitungsanlage versorgt werden, bestehend aus einem Gehäuse, welches in unmittelbarem Kontakt mit dem Wärmeverbraucher angeordnet ist und im Gehäuse auf dessen dem Wärmeverbraucher zugewandten Seite mindestens ein Meßfühler angeordnet ist, dessen Leitungen zu einer im Inneren des Gehäuses angeordneten elektrischen Auswertschaltung führen zur integralen Verarbeitung vorzugsweise zur Anzeige, Speicherung und gegebenenfalls Fernleitung des Meßfühlsignals in eine bleibende Verbrauchsanzeige.

Für die Verbrauchsermittlung einer Heizungsanlage sind verschiedene Meßverfahren bekannt, nach denen die Verbrauchsermittlung durchzuführen ist. Die VDI-Richtlinien Nr. 2077 unterscheiden hier folgende Verfahren:
a) das physikalische exakte Meßverfahren
b) das Ersatzverfahren
c) das Hilfsverfahren.

Die Verbrauchsermittlung bei der Erfassung der über Heizkörper abgegebenen Wärmemenge geht bei dem Hilfsverfahren dabei von folgender theoretischer Gleichung

- 2 -

aus:

$$Q = \alpha \cdot A \cdot \left( \vartheta_0^0 - \vartheta_R \right)$$

dabei bedeuten:

Q abgegebene Wärmemenge

$\alpha$ Wärmeübergangskoeffizient zwischen Abgabeoberfläche,

zum Beispiel Heizkörperoberfläche und Raumluft

A äußeren Oberfläche des Abgabekörpers z.B. Heizkörpers

$\vartheta_0$ Oberflächentemperatur des Abgabekörpers z.B. Heizkörpers

$\vartheta_R$ Raumtemperatur oder Ersatzgröße.

Das Produkt $\alpha \cdot A$ kann für einen Heizkörper in etwa als konstant betrachtet werden, so daß die Wärmeabgabe bei einem Heizkörper eine Funktion der Heizkörper-Oberflächentemperatur und der Raumtemperatur ist.

Als Hilfsverfahren ist am weitesten die Messung durch Verdunstungsgeräte, sogenannte Heizkostenverteiler, verbreitet. Diese Heizkostenverteiler sind die wirtschaftlichsten und daher gebräuchlichsten Geräte und sind in sehr großen Stückzahlen (ca. 25 Millionen in der BRD) in Anwendung.

Der Heizkostenverteiler arbeitet nach dem Verdunstungs-

- 3 -

prinzip. Die Temperatur des Heizkörpers wird auf den Heizkostenverteiler übertragen, in dem sich ein mit einer Spezialflüssigkeit gefülltes offenes kalibriertes Meßröhrchen befindet. In Abhängigkeit von der Temperatur und der Benutzungsdauer des Heizkörpers verdunstet nun diese Flüssigkeit, wobei die verdunstete Menge auf einer Skala abgelesen werden kann.

Die Heizkörper-spezifischen Daten, die Wärmeleistung, Heizkörpertype und Montageart der Heizkostenverteiler können in einer sogenannten Produktenskala berücksichtigt werden, so daß die Ablesewerte einen direkten Relativwert zum Wärmeverbraucher darstellen.

Für den Einsatz der Heizkostenverteiler, deren Montage sowie die Abrechnung der Heizkosten an sich, sind RAL-Gütebestimmungen erstellt worden (RAL-RG 795); diese legen die Anforderungen für das gesamte System fest.

Desweiteren sind mehrere elektrische Verteilungssysteme zur Heizkostenverteilung bekannt geworden, deren Meßsignal in einer elektronischen Schaltung pro Abnehmer bewertet und über eine elektrische Leitung an eine Zentralstelle weitergegeben werden. Diese bisher bekannten elektrischen Heizkostenverteilungen besitzen jedoch den Nachteil, daß die für ein derartiges System zur Ver-

- 4 -

fügung stehenden Kosten weit überschritten werden.

Die Erfindung betrifft außerdem eine Vorrichtung zur elektrischen Verbrauchsermittlung der Warmwasserkosten an einzelnen oder mehreren Zapfstellen einzelner Verbraucher, bestehend aus einem Kompaktgehäuse, welches in unmittelbarem Kontakt mit dem Warmwasser steht.

Es sind verschiedene Meßverfahren bekannt, die Verbrauchsermittlung durchzuführen. Hierzu gehören Warmwasserzähler in verschiedenen Ausführungen mit Flügelrad oder Turbinen u.a. sowie Kostenverteiler nach dem Verdunstungsprinzip.

Die Verbrauchsermittlung bei der Erfassung der Warmwasserkosten geht dabei von folgender theoretischer Gleichung aus:

$$Q = m \cdot c \cdot (\vartheta_w - \vartheta_k)$$

Dabei bedeutet Q im Wasser enthaltene Wärmemenge.

m = Durchfluß des Warmwassers

c = Wärmekapazität des Warmwassers

$\vartheta_w$ = Warmwassertemperatur

$\vartheta_k$ = Kaltwassertemperatur .

In dieser Gleichung kann $\frac{0}{h}$ und c als konstant angenommen werden, so daß für die Verbrauchserfassung lediglich die Durchflußmenge und die Warmwassertemperatur erforderlich ist.

Bei Verwendung von handelsüblichen Wasserzählern wird
vorausgesetzt, daß die Warmwassertemperatur bei den
einzelnen Warmwasserzapfstellen gleich ist, da sie aus
einer zentral versorgten Anlage gespeist werden, so daß
in diesem Falle lediglich die Wassermenge als Kriterium
herangezogen wird.

Bei den Verdunstungsgeräten wird demgegenüber bei Wasserentnahme ein Teilstrom einem Wärmetauscher zugeführt;
unter Einfluß der Wärmezufuhr findet ein Verdunsten der
Meßflüssigkeit aus dem warmen in den kalten Meßschenkel
des Meßröhrchens statt. Gleichzeitig erfolgt eine
Mengenerfassung durch die Dauer und die Intensität der
Beeinflussung der Verdunstung.

Es ist bereits vorgeschlagen worden,
in einer Vorrichtung der eingangs genannten
Gattung im Gehäuse auf dessen dem Wärmeverbraucher zugewandten Unterseite mindestens einen Meßfühler anzuordnen, dessen Leitung zu einer im Inneren des Gehäuses
angeordneten elektrischen Auswertschaltung führt, um

- 6 -

das Signal des Meßfühlers integral zu verarbeiten, anzuzeigen, zu speichern und gegebenenfalls in eine Fernleitung aufzugeben. Desweiteren sind im Innern des Gehäuses gegebenenfalls eine Zähleinrichtung mit von außen ablesbarer Anzeige und eine Batterieversorgung angeordnet.

Dabei liegt der Erfindung die Aufgabe zugrunde, eine Vorrichtung der eingangs genannten Gattung so weiter zu verbessern, daß Meßfühler und Anzeigeeinheit von einer exthermen Energieversorgung oder internen Batterieversorgung unabhängig sind, wobei die Vorrichtung eine gesteigerte Genauigkeit aufweisen soll, um den Anzeigefehler weiter zu verkleinern.

Die Lösung dieser Aufgabe besteht darin, daß erfindungsgemäß der Meßfühler mindestens ein Meßwandler, zum Beispiel ein Thermoelement ist, der einen geringen Anteil der Wärmeenergie des Wärmeverbrauchers in Abhängigkeit von dessen Temperatur in Thermoelektrizität umwandelt, die als Meßgröße für die abgegebene Wärmemenge des Wärmeverbrauchers zur Versorgung der elektrischen Auswertschaltung dient, die zur Erzeugung eines Temperaturgefälles innerhalb des Gehäuses an der dem Wärme-

- 7 -

verbraucher abgewandten Seite angeordnet ist.

Die Erfindung besitzt den hervorstechenden Vorteil, daß diese von einer exthermen Energieversorgung oder von einer internen Batterieversorgung völlig unabhängig ist. Sondern ein geringer Teil der im Wärmeverbraucher zur Verfügung stehenden Wärmemenge wird über einen Meßwandler in Thermoelektrizität umgewandelt, wodurch somit der Meßwandler gleichzeitig als Energiequelle dient. Der Meßwandler hat somit in vorteilhafterweise eine doppelte Funktion: zum einen dient er als elektrische Energiequelle, zum anderen dient sein Meßsignal zur Bestimmung der verbrauchten Wärmemenge, da die Größe der im Meßwandler erzeugten Thermospannung ein Maß für die verbrauchte Wärmemenge des Wärmeverbrauchers ist.

In vorteilhafter Ausgestaltung der Erfindung kann der Meßwandler, der gleichzeitig der Meßfühler ist, aus einer Vielzahl von in Reihe geschalteten Thermoelementen bestehen, wobei die Auswertschaltung eine elektrolytische Meßzelle ist, die mit der temperaturabhängigen Gesamtspannung der Thermoelemente als Betriebsspannung beaufschlagt ist. Dadurch wird in vorteilhafterweise erreicht, daß über eine Vielzahl von Thermoelementen eine genügend große, temperatur-

- 8 -

abhängige Ausgangsspannung zur Verfügung gestellt
wird, die ausreicht, um eine elektrolytische Meßzelle zu betreiben.

Dabei ist es möglich, nur eine thermoelektrische
Energiequelle vorzusehen, deren Thermoelemente im
unmittelbaren Kontakt mit dem Wärmeverbraucher stehen.
Die Berücksichtigung der Raumtemperatur kann über die
Eingabe einer Ersatzgröße erfolgen, was mittels eines
Anpassungsnetzwerkes, welches der elektrolytischen
Meßzelle vor- oder parallel-geschaltet ist, erfolgen
kann. Es muß nur sichergestellt werden, daß zwischen
der thermoelektrischen Energiequelle und dem Anzeigegerät ein Temperaturgefälle herrscht, damit die physikalischen Bedingungen zur Erzeugung eines Thermostromes
gegeben sind. Dieser notwendige Temperaturunterschied
kann klein sein.

Desweiteren ist es möglich, zur Erzeugung einer Referenztemperatur mindestens einen zweiten Meßwandler
vorzusehen, der in Abstand von dem Wärmeverbraucher
angeordnet ist und der zusammen mit dem in unmittelbarem Kontakt mit dem Wärmeverbraucher stehenden Meßwandler eine temperaturabhängige Differenzspannung
bildet, die auf die Auswertschaltung aufgegeben wird.
Dadurch ist es möglich, eine höchst genaue Anzeige der verbrauchten Wärmemenge zu ermitteln, wobei die Anzeige von internen, separaten Energiequellen oder externen Energiequellen völlig unabhängig ist.

Desweiteren kann die Anzeige der Auswertschaltung auf ein Anzeigegerät gegeben werden mit von außen ablesbarer analoger oder digitaler Anzeige und interner oder externer Energieversorgung.

In einer weiteren Lösung der genannten Aufgabe kann erfindungsgemäß der Meßfühler aus mindestens zwei Schwingquarzen, deren Schwingungsfrequenzen unterschiedlich temperaturabhängig sind, wobei aus den beiden Frequenzen eine temperaturabhängige Schwebungsfrequenz gebildet wird, die als Meßgröße für die abgegebene Wärmemenge des Wärmeverbrauchers auf die elektrische Auswertschaltung gegeben wird.

In weiterer, erfindungsgemäßer Anwendung kann auch hier die zur Versorgung der Schwingquarze notwendige Energie mittels Meßwandler erzeugt werden, die einen geringen Anteil der Wärmeenergie des Wärmeverbrauchers in Thermoelektrizität umwandeln, wobei diese Gleichspannung auf die Schwingquarze und gegebenenfalls auf die Auswertschaltung aufgegeben wird. In diesem Fall wird ebenfalls völlige Unabhängigkeit der Vorrichtung von einer internen, separaten Energiequelle oder einer externen Energiequelle erreicht, wobei aufgrund der hohen Frequenzgenauigkeit der Schwingquarze eine sehr genaue Anzeige mit minimalem Fehler erreicht wird.

In weiterer erfindungsgemäßer Ausgestaltung kann die elektrische Auswertschaltung einen Frequenzteiler mit nachfolgendem Anzeigegerät aufweisen.

Die Erfindung ist in der nachfolgenden Beschreibung anhand mehrerer in der Zeichnung dargestellter Ausführungsbeispiele näher erläutert. Dabei zeigen:

Figur 1 eine Prinzipdarstellung des Arbeitsprinzips eines elektrischen Heizkostenverteilers mit elektrolytischer Meßzelle

Figur 2 ein Ausführungsbeispiel eines elektrischen Heizkostenverteilers mit einer Vielzahl von Thermoelementen, die zu einer thermoelektrischen Spannungsquelle zusammengefaßt sind
und

Figur 3 ein Ausführungsbeispiel eines elektronischen Heizkostenverteilers mit Schwingquarzen.

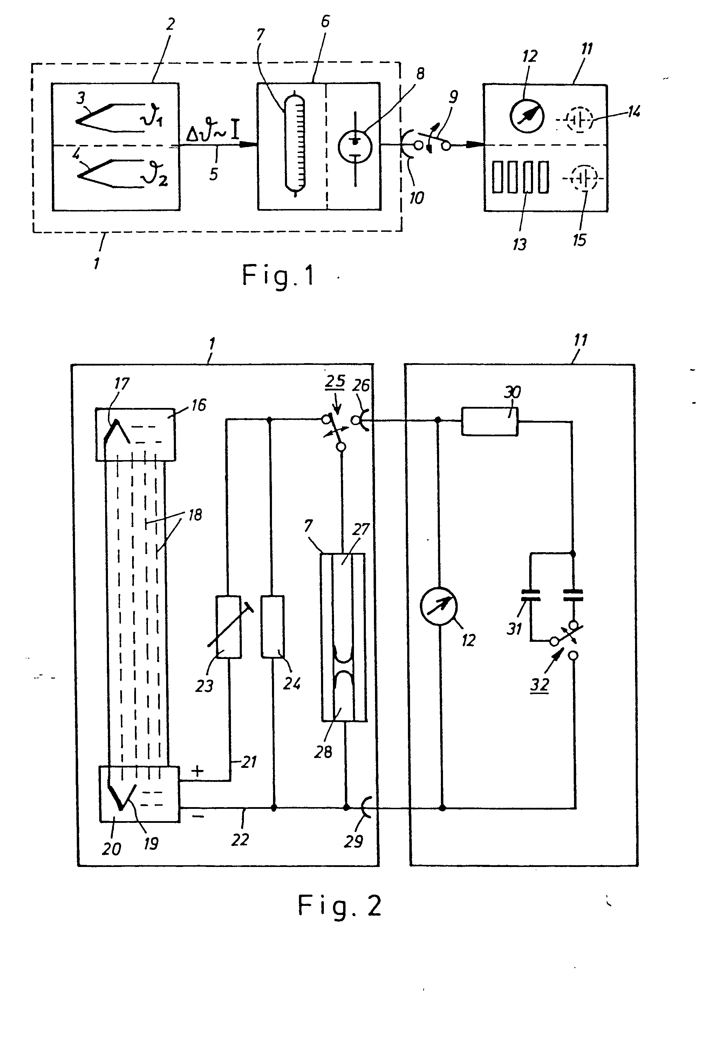

In Figur 1 ist das Arbeitsprinzip eines elektrischen oder elektronischen Heizkostenverteilers mit einer elektrolytischen Meßzelle dargestellt. Innerhalb eines Gehäuses 1, welches in geeigneter Form mit einem nicht dargestellten Wärmeverbraucher verbunden ist, befindet sich eine thermoelektrische Energiequelle 2, die gleichzeitig der Meßfühler ist. Die thermoelektrische Energiequelle 2 besteht aus einer Reihe von Thermoelementen 3 und gegebenenfalls 4, die vorzugsweise in Reihe geschaltet sind. Die Thermoelemente 3 stehen in engem Kontakt mit dem Wärmeverbraucher und sind deshalb vorzugsweise auf der Innenseite des Gehäuses 1 angeordnet, die mit dem Wärmeverbraucher in direktem Kontakt steht. Die Ausgangsleitung 5 aller Thermoelemente 3 führt zu einer elektrischen oder elektronischen Auswertschaltung, die im hier gezeigten Beispiel aus einer elektrolytischen Meßzelle, Coulombmeter, besteht. Die elektrische Auswertschaltung befindet sich dabei auf der Innenseite des Gehäuses 1, die dem Wärmeverbraucher abgewandt ist, so daß zwischen der thermoelektrischen Energiequelle 2 und der elektrischen Auswertschaltung 6 ein Temperaturgefälle besteht.

- 12 -

In Figur 1 sind beide Prinzipien dargestellt, nämlich eine thermoelektrische Energiequelle 2 mit einer Reihe von Thermoelementen 3, deren Ausgang zum „kalten Ende", also zur elektrolytischen Meßzelle 7 geführt sind und die Schaltung mittels Referenzelementen 4, weshalb die Energiequelle 2 mittels einer Strichlinierung unterteilt ist. Der Sitz der elektromotorischen Kraft sind bei der ersten Variante die in Reihe geschalteten Thermoelemente 3, die sich am heißen Ende befinden; der Sitz der elektromotorischen Kraft der zweiten Variante sind sowohl die Thermoelemente 3 und 4, die zusammengeschaltet ein Differenzsignal bilden.

Der Meßvorgang ist folgendermaßen zu erklären:

Die Thermoelemente 3 stellen einen Meßwandler dar, der eine geringfügige Menge an Wärmeenergie des Wärmeverbrauchers in Thermoelektrizität umwandelt und am Ausgang der Thermoelemente 3, also auf der Leitung 5, eine Thermospannung zur Verfügung stellt. Das auf der Leitung 5 anstehende Gleichspannungssignal wird zur temperaturmäßig kälter gelegenen elektrischen Auswertschaltung 6 geleitet und dort auf die elektrolytische Meßzelle 7 aufgegeben. Aufgrund des Temperaturunterschiedes zwischen den Thermoelementen 3 und der elektrolytischen Meßzelle 7 fließt dann ein Thermostrom, der der Temperaturdifferenz zwischen den Thermoelementen 3 und der elektrischen Auswertschaltung 6 proportional ist. Die Raumtemperatur kann nun als Ersatzgröße berücksichtigt werden, wodurch nur ein geringfügiger Fehler entsteht. Dann aber ist die Temperaturdifferenz zwischen der thermoelektrischen Energiequelle 2 und der elektrischen Auswertschaltung 6 ein direktes Maß für die vom Wärmeverbraucher abgegebene Wärmemenge, so daß also die Thermoelemente 3 gleichzeitig das Meßsignal liefern. Die Thermoelemente 3 stellen somit Meßfühler und Energiequelle in einem dar.

Es ist aber auch möglich, weitere Thermoelemente 4 vorzusehen, welche im Abstand von dem Wärmeverbraucher

- 14 -

angeordnet sind, zum Beispiel unterhalb des Wärmeverbrauchers oder innerhalb des Gehäuses 1 an der
am weitesten vom Wärmeverbraucher entfernten Stelle.
Ein bevorzugter Ort zur Unterbringung der Referenz-
Thermoelemente ist der Thermostatkopf.

Diese Referenz-Thermoelemente 4 geben eine Thermospannung ab, die proportional der Raumtemperatur
ist. Das aus den Thermoelementen 3 und 4 gebildete
Differenzsignal ist proportional dem gesamten Thermostrom und ein direktes Maß für die abgegebene Wärmemenge des Wärmeverbrauchers. Dieses Differenzsignal
kann nun auf die elektrolytische Meßzelle 7 der
elektrischen Auswertschaltung gegeben werden. In
diesem Fall kann somit eine sich ändernde Raumtemperatur berücksichtigt werden, wodurch die Vorrichtung ein hohes Maß an Genauigkeit besitzt. In Figur 1 ist mit der Bezugsziffer 8 ein Speicherglied
bezeichnet, welches summarisch anzeigen soll, daß
der integrierte Meßwert beliebig speicherbar ist.

Das Gehäuse 1 besitzt eine Anschlußbuchse 1o für
eine Peripherie-Anzeigeeinheit 11, die mittels des
Schalters 9 an die Buchse 1o gelegt wird. Die
Peripherie-Anzeigeeinheit 11 kann entweder ein analog-Anzeigegerät 12 oder ein digital-Anzeigegerät 13 aufweisen. Daneben kann die Peripherie-
Anzeigeeinheit 11 jeweils eine interne Energieversorgung 14, 15 besitzen.

Die Verwendung einer thermoelektrischen Energiequelle,
die gleichzeitig das Meßsignal liefert, in Verbindung
mit einer elektrolytischen Meßzelle besitzt desweiteren den Vorteil, daß die elektrolytische Meßzelle auch
im Milli-Voltbereich geringe Thermoströme integrieren
und dauerhaft anzeigen kann. Selbst wenn die Peripherie-
Anzeigeeinheit 11 aufgrund Manipulation ausfällt, ist
mittels der elektrolytischen Meßzelle 7 eine genaue
Anzeige und ein genaues Ablesen der verbrauchten Wärmemenge möglich. Der weitere Vorteil besteht darin, daß
für die elektrische Auswertschaltung 6 keinerlei Hilfsspannung benötigt wird. Eine ausreichende Thermospannung für die in Figur 1 gezeigte Anordnung kann
mit handelsüblichen Thermoelementen beispielsweise
schon mit der Reihenschaltung von 30 Thermoelementen
erreicht werden.

Die Herstellung der Thermoelemente in Reihenschaltung
kann mittels moderner Aufdampftechniken geschehen, was
beispielsweise aus der Herstellung von Isotopenbatterien für Herzschrittmacher bekannt ist. Dedurch lassen sich eine Vielzahl von Thermoelementen billig und auch einfache Weise herstellen.

Figur 2 zeigt ein Ausführungsbeispiel der in Figur 1 gezeigten prinzipiellen Darstellung. In einem Gehäuse 1 ist eine thermoelektrische Energiequelle 16 angeordnet, wobei diese Energiequelle 16 in direktem Kontakt mit dem Wärmeverbraucher steht. Die thermoelektrische Energiequelle 16 besteht aus einer Vielzahl von in Reihe geschalteten Thermoelementen 17. Eine zweite thermoelektrische Energiequelle 2o ist in Abstand vom Wärmeverbraucher vorgesehen, so daß zwischen der Energiequelle 16 und der Energiequelle 2o ein Temperaturunterschied herrscht. Die Gesamtheit 18 der Thermoelemente 17, 19 ist nun zu einer Differenzschaltung zusammengeschlossen. Das auf der Ausgangsleitung 21 zur Verfügung stehende positive Ausgangssignal wird über einen Spannungsteiler, bestehend aus einem Einstellwiderstand 23 und einem Festwiderstand 24 auf einen Schalter 25 gegeben und von diesem auf den oberen Quecksilberfaden 27 der elektrolytischen Meßzelle 7 gelegt. Der untere Quecksilberfaden 28 ist über die Ausgangsleitung 22 mit dem anderen Ausgang der Differenzschaltung der beiden Energiequellen 16, 2o verbunden. Somit stellen die beiden Energiequellen 16, 2o einen Thermostrom zur Verfügung, der auf die Meßzelle 7 aufgegeben wird und der gleich-zeitig ein direktes Maß für die verbrauchte Wärme-menge des Wärmeverbrauchers darstellt. Über An-schlußbuchsen 26, 29 ist nun wiederum eine Peripherie-Anzeigeeinheit 11 über den Schalter 25 an die elektrolytische Meßzelle 7 anschließbar, wobei die Peripherie-Anzeigeeinheit gemäß derselben in Figur 1 ausgestaltet sein kann. Durch die Bezugsziffer 31 ist generell ein Speicherglied bezeichnet, wodurch angedeutet sein soll, daß natürlich die angezeigten verbrauchten Wärmemengen dauerhaft gespeichert und sichtbar gemacht werden können.

Weitere hervorstechende Vorteile der Erfindung gemäß den Figuren 1 und 2 bestehen darin, daß nur passive Bauelemente zur Anwendung kommen und die Meßkette sehr einfach aufgebaut ist und aus nur wenigen Teilen besteht. Dadurch wird ein sehr hohes Maß an Betriebssicherheit erreicht, wobei die thermoelektrische Energiequelle die Temperaturdifferenzmessung und die Bereitstellung der Hilfsenergie für die elektrische Auswertschaltung 6 vornimmt. Die elektrische Auswertschaltung 6 integriert nun, speichert und zeigt die Anzeige der verbrauchten Wärmemenge an. Ein weiterer Vorteil besteht darin, daß durch die Ver-

- 18 -

wendung der elektrolytischen Meßzelle der Betrieb bei
sehr kleinen Leistungen möglich ist. Der Anschluß
einer Peripherie-Anzeigeeinheit 11 dient nur dazu,
die kleine Anzeige der elektrolytischen Meßzelle
optisch zu vergrößern und somit eine hohe Auflösung
zu erreichen.

Eine Erweiterung der Meßvorrichtung besteht darin,
daß in der Peripherie-Anzeigeeinheit 11 eine Zusatzelektronik vorgesehen ist, die den Stand der Quecksilbersäule innerhalb der elektrolytischen Meßzelle
7 erfaßt. Dies kann mittels Messung des Wechselstromwiderstandes der Quecksilbersäule geschehen,
die Länge der Quecksilbersäule kann auch auf andere,
geeignete Weise elektrisch ermittelt werden.

In vorteilhafterweise kann die Referenzmeßstelle so
ausgebildet sein, daß sie die Raumtemperatur erfaßt.
Dann kann im passiven Anpassungsnetzwerk 23, 24 auf
die Berücksichtigung einer festen Raumtemperatur verzichtet werden, so daß die tatsächlich herrschende
Raumtemperatur mit eingeht. In diesem Fall wird
die tatsächlich verbrauchte Wärmemenge des Wärmeverbrauchers angezeigt. Als Montageorte der Referenzmeßstelle eignet sich beispielsweise bei einem
Heizkörper gut der Heizkörperthermostat. Denn der Einbau der Vergleichsmeßstelle in diesen ist für den Manipulationsfall „Wärmestau" vorteilhaft: Bei manipulatorischer Isolierung des Raumtemperaturfühlers würde das Thermostatventil schließen und die Wärmelieferung unterbrechen, solange die Manipulation anhält.

In ähnlicher Weise ist auch die Anbringung des Raumtemperaturfühlers 4, 2o am kältesten Ort des Raumes möglich, wenn in die elektrische Wärmemengenmessung auch noch eine elektrische Raumtemperaturregelung eingeschlossen wird.

In gleicher Weise kann prinzipiell ein Warmwasserkostenverteiler aufgebaut sein. In diesem Fall muß im Anpassungsnetzwerk 23, 24 gemäß Figur 2 der Temperaturunterschied zwischen der angenommenen Kaltwassertemperatur und der tatsächlichen Warmwassertemperatur berücksichtigt werden. Das kann mittels eines Korrekturfaktors geschehen, der bei der Auswertung der Anzeige berücksichtigt wird.

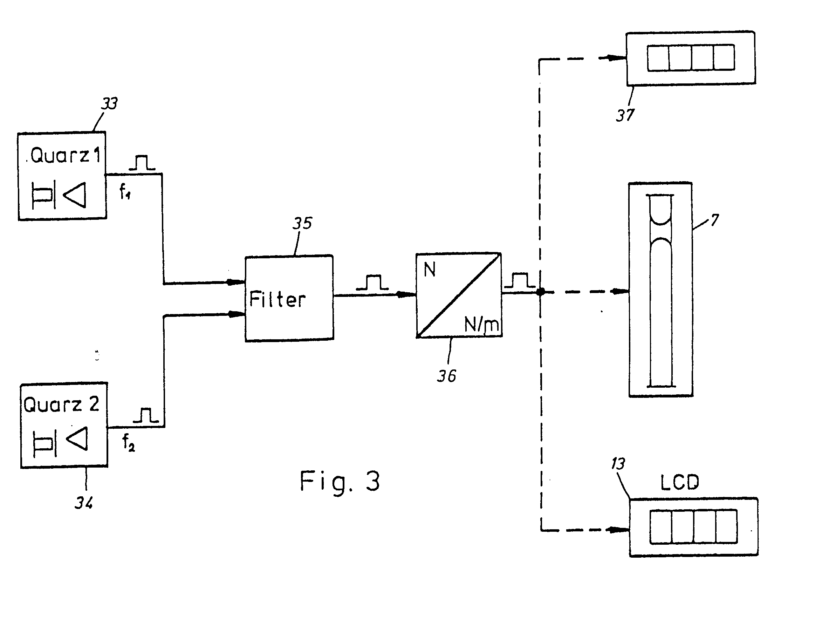

Figur 3 zeigt ein weiteres Lösungsbeispiel der Aufgabe, wobei hier erfindungsgemäß der Meßfühler aus mindestens zwei Schwingquarzen 33, 34 besteht, deren Schwingungsfrequenzen $f_1$ und $f_2$ unterschiedlich

- 2o -

temperaturabhängig sind und somit einen unterschiedlichen Temperaturgang aufweist. Der eine Schwingquarz 33 ist in unmittelbarem Kontakt mit dem nichtgezeigten Wärmeverbraucher angeordnet, weshalb die
Frequenzkurve dieses Schwingquarzes 33 der Temperatur des Wärmeverbrauchers folgt. Der zweite Schwingquarz 34 kann zur Referenzanzeige an einer kälteren
Stelle angeordnet sein, so daß seine Schwingfrequenz
$f_2$ der Raumtemperatur entspricht. Oder beiden Schwingquarze 33, 34 sind in unmittelbarem Kontakt mit dem
Wärmeverbraucher angeordnet. Zwischen beiden Frequenzen $f_1$ und $f_2$ wird nun durch Differenz die Schwebungsfrequenz gebildet. Im Falle, daß beiden Schwingquarze in unmittelbarer Nähe des Wärmeverbrauchers angeordnet sind, wird nun bei steigender Temperatur der
eine Schwingquarz, zum Beispiel der Quarz 34, mit Hilfe von elektrischen Bauelementen, zum Beispiel Thermistoren und Kapazitätsdioden so gezogen, wie es dem
jeweiligen Exponentialwert zum Beispiel $( \triangle t )^{1,33}$
entspricht.

Die dergestalt erzeugte Schwebungsfrequenz wird auf
ein Filter 35 aufgegeben, dessen Ausgang zu einem
Frequenzteiler 36 führt, der die Schwebungsfrequenz
auf eine von einem Anzeigegerät verarbeitbare Frequenz herunterteilt. Gleichzeitig kann  mit dem Frequenzteiler 36 die jeweilige Nennleistung des Heizkörpers berücksichtigt werden. Der Ausgang des Frequenzteilers 36 kann dann beispielsweise auf ein Schrittmotorzählwerk 37, eine elektrolytische Meßzelle 7 oder ein Digital-Anzeigegerät 13 gegeben werden.

In weiterer, erfindungsgemäßer Ausgestaltung kann die zur Schwingungsanregung benötigte Energie für die Schwingquarze 33, 34 über eine thermoelektrische Energiequelle 38 erzeugt werden, die einen geringfügigen Teil der Wärmemenge des Wärmeverbrauchers in Thermoelektrizität umwandelt. Die thermoelektrische Energiequelle 38 besteht, ähnlich wie in Figur 1 und 2 beschrieben, aus einer Reihe hintereinander geschalteter Thermoelemente, deren Ausgangsspannung nur dazu dient, die Schwingquarze 33, 34 zum schwingen anzuregen. Das Meßsignal für die Anzeige der verbrauchten Wärmemenge des Wärmeverbrauchers wird hier aus den Schwingquarzen gewonnen, die Thermospannung der Energiequelle 38 dient nur zum Betrieb der Schwingquarze. Somit wird präsentierend in Figur 3 die Schwingquarze 33, 34 den Meßfühler.

- 22 -

Die besonderen Vorteile dieses Ausführungsbeispiels sind darin zu sehen, daß dieses ohne Zwischenschaltung analoger Meßglieder arbeitet. Dadurch kann dieser Heizkostenverteiler in Großintegration auf einem Chip hergestellt werden, der alle Meßglieder, ausgenommen die Anzeige, enthält. Auf diese Weise kann die Herstellung von elektronischen Heizkostenverteilern enorm verbilligt werden, wobei sämtliche drei gezeigten Ausführungsbeispiele sich zur Massenfertigung eignen.

0036108

- 23 -

Liste der Bezugszeichen
------------------------

| | |
|---|---|
| 1 | Gehäuse |
| 2 | thermoelektrische Energiequelle |
| 3 | Thermoelement in Kontakt mit einem Wärmeverbraucher |
| 4 | Referenz-Thermoelement |
| 5 | Leitung mit Differenzsignal |
| 6 | elektrische Auswertschaltung |
| 7 | elektrolytische Meßzelle (Coulombmeter) |
| 8 | Speicherglied (z.B.elektrolytisches Speicherglied) |
| 9 | Schalter |
| 1o | Anschlußbuchse für Peripherie-Anzeigeeinheit |
| 11 | Peripherie-Anzeigeeinheit |
| 12 | Analog-Anzeigegerät |
| 13 | Digital-Anzeigegerät |
| 14, 15 | interne Energieversorgung der Peripherie-Anzeigeeinheit |
| 16 | thermoelektrische Energiequelle |
| 17 | Thermoelement in Kontakt mit einem Wärmeverbraucher |
| 18 | Gesamtheit der Thermoelemente |
| 19 | Referenz-Thermoelement |
| 2o | thermoelektrische Energiequelle |
| 21 | Plus-Ausgangsleitung |
| 22 | Minus-Ausgangsleitung |

- 24 -

| 23 | Einstellwiderstand |
|---|---|
| 24 | Anpaßwiderstand |
| 25 | Schalter |
| 26 | Ausgangsbuchse |
| 27, 28 | Quecksilberfäden |
| 29 | Ausgangsbuchse |
| 30 | Anpaßwiderstand |
| 31 | Speicherglied |
| 32 | Schalter |
| 33, 34 | Schwingquarze |
| 35 | Filter |
| 36 | Frequenzteiler |
| 37 | Schrittmotorzählwerke |

- 1 -

<u>Patentansprüche</u>

1. Vorrichtung zur elektrischen Verbrauchsermittlung einzelner Wärmeverbraucher, insbesondere Heizkörper und/oder Warmwasserzapfstellen, die von einer Wärmequelle, insbesondere Heizanlage und/oder Warmwasserbereitungsanlage versorgt werden, bestehend aus einem Gehäuse, welches in unmittelbarem Kontakt mit dem Wärmeverbraucher angeordnet ist und im Gehäuse auf dessen dem Wärmeverbraucher zugewandten Seite mindestens ein Meßfühler angeordnet ist, dessen Leitungen zu einer im Inneren des Gehäuses angeordneten elektrischen Auswertschaltung führen zur integralen Verarbeitung, vorzugsweise zur Anzeige, Speicherung und gegebenenfalls Fernleitung des Meßfühlsignals in eine bleibende Verbrauchsanzeige ,

dadurch gekennzeichnet,

daß der Meßfühler mindestens ein Meßwandler, zum Beispiel ein Thermoelement (3), ist, der einen geringen Anteil der Wärmeenergie des Wärmeverbrauchers in Abhängigkeit von dessen Temperatur in Thermoelektrizität umwandelt, die als Meßgröße für die abgegebene Wärmemenge des Wärmeverbrauchers zur Versorgung der elektrischen Auswertschaltung (6) dient, die zur Erzeugung eines Temperaturgefälles innerhalb des Gehäuses an der dem Wärmeverbraucher abgewandten Seite angeordnet ist.

2. Vorrichtung nach Anspruch 1,

dadurch gekennzeichnet,

daß der Meßwandler aus einer Vielzahl von in Reihe geschalteten Thermoelementen (17, 18, 19) besteht und die Auswertschaltung (6) eine elektrolytische Meßzelle (7) (Coulombmeter) ist, die mit der temperaturabhängigen Gesamtspannung der Thermoelemente als Betriebsspannung beaufschlagt ist.

3. Vorrichtung nach Anspruch 2,

dadurch gekennzeichnet,

daß der elektrolytischen Meßzelle (7) ein Anpassungsnetzwerk (23, 24) vor- oder parallel-geschaltet ist welches zur Einstellung der Leistung des Wärmeverbrauchers und gegebenenfalls der Referenztemperatur dient.

4. Vorrichtung nach Anspruch 1 und 2,

dadurch gekennzeichnet,

daß zur Erzeugung einer Referenztemperatur mindestens ein zweiter Meßwandler (4, 19, 2o)

- 3 -

dient, der in Abstand von dem Wärmeverbraucher angeordnet ist und der zusammen mit dem in unmittelbaren Kontakt mit dem Wärmeverbraucher stehenden
Meßwandler eine Temperaturabhängige Differenzspannung bildet, die auf die Auswertschaltung (6)
aufgegeben wird.

5. Vorrichtung nach einem der vorherigen Ansprüche,
dadurch gekennzeichnet,
daß die Anzeige der Auswertschaltung (6)
auf ein Anzeigegerät aufgebbar ist mit von
außen ablesbarer analoger oder digitaler
Anzeige (12, 13) und interner oder externer
Energieversorgung (14, 15).

6. Vorrichtung zur elektrischen Verbrauchsermittlung
einzelner Wärmeverbraucher, insbesondere Heizkörper
und/oder Warmwasserzapfstellen, die von einer Wärmequelle, insbesondere Heizanlage und/oder Warmwasserbereitungsanlage versorgt werden, bestehend aus einem Gehäuse, welches in unmittelbarem Kontakt mit
dem Wärmeverbraucher angeordnet ist und im Gehäuse
auf dessen dem Wärmeverbraucher zugewandten Seite
mindestens ein Meßfühler angeordnet ist, dessen Leitungen zu einer im Inneren des Gehäuses angeordneten elektrischen Auswertschaltung führen zur integralen Verarbeitung, vorzugsweise zur Anzeige, Speicherung und gegebenenfalls Fernleitung des Meßfühlsignals in eine bleibende Verbrauchsanzeige, dadurch gekennzeichnet, daß der Meßfühler aus mindestens zwei Schwingquarzen (33, 34) besteht, deren Schwingungsfrequenzen unterschiedlich temperaturabhängig sind, wobei aus den beiden Frequenzen eine temperaturabhängige Schwebungsfrequenz gebildet wird, die als Meßgröße für die abgegebene Wärmemenge des Wärmeverbrauchers auf die elektrische Auswertschaltung (35, 36, 37) gegeben wird.

7. Vorrichtung nach Anspruch 6, dadurch gekennzeichnet, daß zur Energieversorgung der Schwingquarze ( 33,34) und gegebenenfalls der Auswertschaltung (35, 36,37) an Wärmeverbraucher ein Meßwandler (38) angeordnet ist, der einen geringen Anteil der Wärmeenergie desselben in Thermoelektrizität umwandelt, wobei diese Gleichspannung auf die Schwingquarze und gegebenenfalls die Auswertschaltung aufgegeben wird.

- 5 -

8. Vorrichtung nach Anspruch 6,

   dadurch gekennzeichnet,

   daß die elektrische Auswertschaltung einen Frequenzteiler (36) mit nachfolgendem Anzeigegerät (7, 13, 37) aufweist.

- 5 -

Fig. 1

Fig. 2

Fig. 3